# EUROPÄISCHE PATENTSCHRIFT

(11) **EP 0 623 639 B1**
(45) Veröffentlichungstag und Bekanntmachung des Hinweises auf die Patenterteilung: **27.08.1997**
(21) Anmeldenummer: 94106566.6
(22) Anmeldetag: 27.04.1994
(51) Int. Cl.: C08G 75/20, C08G 75/02

(54) **Oxidation von Polyarylensulfiden**
Oxidation of poly (arylene sulfide)
Oxydation de poly (sulfure d'arylène)

(30) Priorität: 04.05.1993 DE 4314736
(43) Veröffentlichungstag der Anmeldung: 09.11.1994
(73) Patentinhaber: HOECHST AKTIENGESELLSCHAFT, 65929 Frankfurt am Main (DE)
(72) Erfinder: Fleischer, Dietrich, Dr., D-64287 Darmstadt (DE); Strutz, Heinz, Dr., D-61250 Usingen (DE); Kulpe, Jürgen, Dr., D-65929 Frankfurt (DE); Schleicher, Andreas, Dr., D-64683 Einhausen (DE)

(56) Entgegenhaltungen:
- EP-A- 0 091 088

## Beschreibung

Die Erfindung betrifft die Oxidation von Polyarylensulfiden mit Ozon als Oxidationsmittel.

Polyarylensulfide sind seit geraumer Zeit bekannt. Aufgrund ihrer hohen Wärmeformbeständigkeit und guten Chemikalienresistenz werden diese Polymere für hochbeanspruchte Bauteile herangezogen. Bei einigen Anwendungen werden jedoch höhere Materialanforderungen gestellt. Speziell ist häufig eine Anhebung der Glastemperatur der Polymeren wünschenswert. Dies soll erreicht werden durch eine polymeranaloge Oxidation von Polyphenylensulfid zu Polyphenylensulfoxid in Essigsäure mit konzentrierter Salpetersäure während 24 Stunden bei 0 bis + 5 °C (US 3,303,007). Die angeführten Eigenschaftswerte für das gebildete Polymer deuten jedoch darauf hin, daß kein Polymeres mit einem Schwefel/Sauerstoff-Verhältnis von 1 zu 1 erhalten wurde, da die Werte für die Wärmeformbeständigkeit nicht erhöht waren. Unter "polymeranalog" ist die Umwandlung eines Polymeren in ein anderes zu verstehen. Nachteile des Verfahrens sind erstens die benötigte lange Reaktionszeit, zweitens die Möglichkeit einer elektrophilen Addition und drittens der acide Angriff der starken mineralischen Säure an der Thioetherbindung bei langen Reaktionszeiten (Abbaureaktionen).

US3303087 offenbart ein Verfahren zur Herstellung von Polyphenylensulfoxiden (PPSO) resp. partiell oxidierten PPS , den PPS/PPSO (S/O = 1:<1). Die Oxidation wird bei 0-5°C innerhalb von 24 Stunden in 50 ml Essigsäureanhydrid mit 1,72ml 70%HNO3 durchgeführt.

Aufgabe der Erfindung ist es, Verfahren zur Oxidation von Polyarylensulfiden zu entwickeln, die wesentlich kürzere Reaktionszeiten bei niedrigeren Temperaturen erfordern. Auch ist die Verwendung von Polyarylensulfiden mit höheren Molekulargewichten als Ausgangsmaterial erwünscht.

Die Aufgabe wurde gelöst durch den Einsatz von Ozon als Oxidationsmittel.

Die Erfindung wie sie in den Anspruchen 1-6 offenbart ist bezieht sich auf ein Verfahren zur Oxidation von Polyarylensulfiden (Polyarylenthioethern), bei dem ein Polymer in fester Form in einem Suspensionsmedium mit Ozon oxidiert wird.

Die Oxidation von polymeren Arylensulfiden mit Ozon gemäß der Erfindung führt bei hoher Selektivität zur Bildung von Polyarylensulfoxiden. Dies ist um so mehr überraschend, als Ozon ein extrem starkes Oxidationsmittel ist. Durch entsprechenden Einsatz der Menge an Ozon ist es möglich, entweder die Schwefelbindung vollständig in die Sulfoxidbindung zu überführen oder jedes beliebige S/O-Verhältnis in der Polymerkette zu erzielen. Dabei hat die Wahl des eingesetzten Suspensionsmittels entscheidenden Einfluß.

Geeignete Polymere sind beispielsweise Polyarylenthioether mit wiederkehrenden Einheiten der Formeln (II) - (VI), deren Synthesen z. B. in Chimia 28 (1974), 567 beschrieben sind: 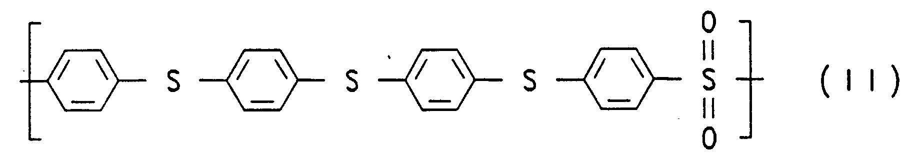 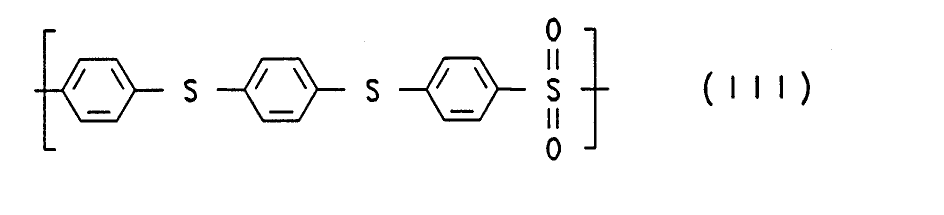 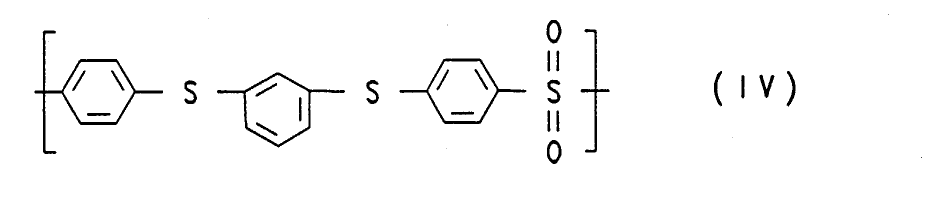 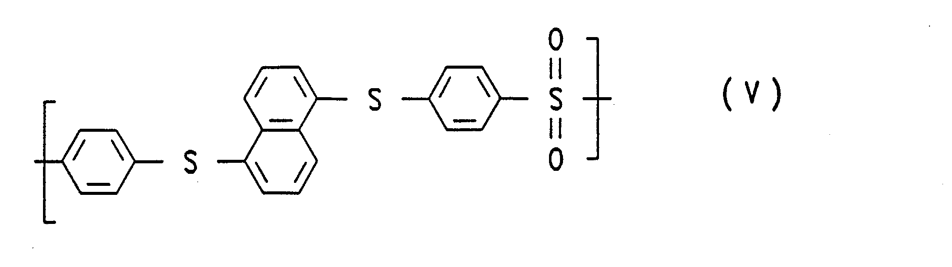 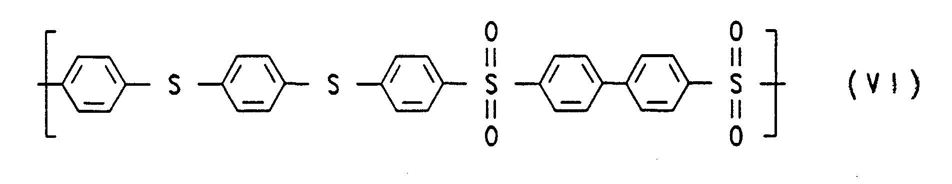 sowie Polyarylenthioether mit wiederkehrenden Einheiten der Formel (VII), die z.B. in US-A-4, 016, 145 beschrieben sind.

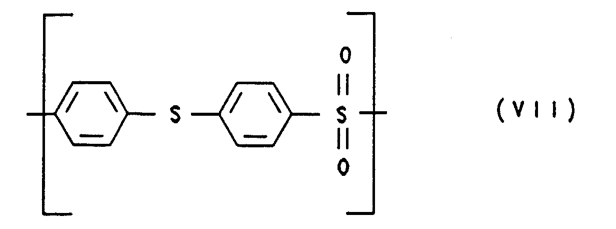

Bevorzugt als Polyarylenthioether ist Polyphenylensulfid (PPS) mit der wiederkehrenden Einheit der Formel (VIII), dessen Herstellungsprozess z. B. in den US-Patenten 3, 354, 129, 3, 919, 177, 4, 038, 262 und 4, 282, 347 beschrieben ist.

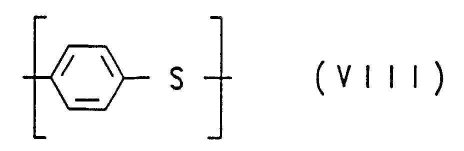

Verbindungen der Formel VIII sind im allgemeinen 1,4-verknüpfte Polyarylensulfide, die bis zu einem Anteil von 30 Mol-% eine 1,2- und/oder 1,3-Verknüpfung am aromatischen Kern aufweisen können.

Für die Erfindung sind im allgemeinen Polyarylenthioether geeignet, die ein mittleres Molekulargewicht von 4 000 bis 200 000, vorzugsweise von 10 000 bis 150 000, insbesondere 25 000 bis 100 000, bestimmt durch GPC, aufweisen.

Die Teilchengröße der eingesetzten Polymere liegt im allgemeinen im Bereich von 5x10⁻⁶ bis 500x10⁻⁶ m, vorzugsweise 10x10⁻⁶ bis 300x10⁻⁶ m und insbesondere 10x10⁻⁶ bis 200x10⁻⁶ m.

Die Reaktionstemperaturen liegen im Bereich von -10 bis + 80 °C, vorzugsweise von 0 bis 50 °C. Die erforderliche Reaktionszeit hängt von dem Angebot an Ozon und dem gewählten Reaktortyp ab und beträgt im allgemeinen 1 Minute bis 2 Stunden, vorzugsweise 5 bis 90 Minuten und insbesondere 5 bis 60 Minuten.

Allerdings ist es auch möglich, bei einer Optimierung der Reaktionsbedingungen auf Zeiten unter einer Minute zu kommen.

Die Oxidation gemäß der Erfindung wird mit einem ozonhaltigen Gasstrom durchgeführt, in dem das Ozon im allgemeinen in einer Konzentration von 0,1 bis 9 Vol.-%, vorzugsweise 2 bis 6 Vol.-%, enthalten ist. Als Trägergas für das Ozon sind Sauerstoff oder Inertgase, wie Stickstoff oder auch Gemische aus diesen geeignet. Ebenfalls kann getrocknete Luft bei der Erzeugung des Ozons eingesetzt werden. Das Ozon wird im allgemeinen durch in der Technik bekannte Methoden, z.B. durch stille elektrische Entladung, erzeugt.

Die Reaktion wird in einem temperierbaren, für Begasungsreaktionen geeigneten Reaktionsgefäß durchgeführt. Dies kann beispielsweise ein begaster Rührkessel oder eine Blasensäule sein.

Als Suspensionsmedien sind alle unter den Reaktionsbedingungen als inert geltende flüssige Verbindungen geeignet, z.B. Wasser, niedere aliphatische Alkohole und Carbonsäuren mit jeweils 1-6, vorzugsweise 1-3 C-Atomen in der Alkylgruppe, die Ester aus den beiden vorgenannten Verbindungsklassen, Kohlenwasserstoffe mit 1-12 C-Atomen, die mit Chlor oder Fluor halogeniert sein können und Gemische aus den genannten Verbindungen. Auch Mineralsäuren sind geeignet, z.B. konzentrierte Schwefelsäure. In protischen Lösungsmitteln oder protische Lösungsmittel enthaltenden Lösungsmittelgemischen kann der Zusatz einer Mineralsäure, z.B. Schwefelsäure, von Vorteil sein.

Beispielsweise wird in Methylenchlorid in kurzer Zeit eine vollständige Oxidation zum Sulfoxid erreicht. Dagegen wird bei Einsatz von niederen aliphatischen Carbonsäuren mit einem Zusatz einer Mineralsäure nur eine teilweise Oxidation erzielt, da die Aufnahmegeschwindigkeit des Ozons bei Erreichen eines Schwefel/Sauerstoffverhältnisses von 1:0,5 deutlich absinkt. Es ist zwar möglich, auch hier eine vollständige Oxidation zu erreichen, jedoch sind dafür unwirtschaftlich lange Reaktionszeiten nötig.

Das Suspensionsmedium löst im allgemeinen keine oder nur sehr geringe Mengen des Polymeren, es fungiert jedoch als Wärme- und Ozonüberträger und hat steuernden Einfluß auf die Selektivität.

Die gemäß der Erfindung erhaltenen Verbindungen lassen sich entweder thermoplastisch verarbeiten oder können beispielsweise durch gängige Sinterverfahren weiterverarbeitet werden, jedoch ist dies abhängig von deren Schmelzpunkten. Die erste Gruppe kann durch die für Thermoplaste gängigen Verarbeitungsmethoden, z. B. Spritzguß oder Extrusion, in Form- und Funktionsteile übergeführt werden. Die Formmassen können auch bekannte pulverförmige Füllstoffe, wie Kreide, Talk, Ton, Glimmer, und/oder faserförmige Verstärkungsmittel, wie Glas- und Kohlenstoffasern, whiskers, sowie weitere übliche Zusatzstoffe und Verarbeitungshilfsmittel, z.B. Gleitmittel, Trennmittel, Antioxidantien, UV-Stabilisatoren, enthalten. Verwendung finden derartige Teile als hochbeanspruchbare Funktionsbauteile, beispielsweise im Flugzeug- und Automobilbau sowie im chemischen Apparatebau.

Die zweite Gruppe, d.h. die durch Sinterverfahren verarbeitbaren Polymere, findet Verwendung bei Funktionsteilen mit einer hohen Temperatur- und Chemikalienbelastung.

In den Beispielen bedeutet Tg die Glasumwandlungstemperatur, Tm ist der Schmelzpunkt.

### Beispiele

### 1) Polyphenylensulfoxid (PPSO)

In einem Reaktionsgefäß mit Scheibenrührer wurden 54,1 g eines Polyphenylensulfid-(PPS)-Pulvers (MW 40 000) mit einem mittleren Partikeldurchmesser von 20 x 10⁻⁶ m, in 400 ml Methylenchlorid suspendiert. In die Suspension wurde bei Temperaturen von -5 bis -7°C Ozon-haltiges Gas eingeleitet bis 0,5 Mol Ozon aufgenommen waren (72 Minuten). Die Ozonkonzentration betrug während der Begasung 51 bis 115 Gramm pro Kubikmeter Trägergas. Nach der Reaktion wurde das Polymerpulver abgesaugt und getrocknet. Im Infrarotspektrum konnte nur die ausschließliche Bildung von Sulfoxid-Gruppen beobachtet werden. Tg: 240°C, Tm: ≥370°C (Zersetzung).

| Elementaranalyse: C₆H₄SO | | | | |
|---|---|---|---|---|
| C 58,04 | H 3,25 | S 25,82 | O 12,89 | (ber.) |
| C 58,3 | H 3,5 | S 25,45 | O 12,75 | (gef.) |

Das Schwefel/Sauerstoff-Verhältnis des erhaltenen Polymers betrug 1:1.

### 2. Polyphenylensulfidsulfoxid (PPS/SO)

In einer temperierbaren Blasensäule (5 cm Durchmesser, 120 cm Länge) wurden 216 g eines PPS-Pulvers wie in Beispiel 1 in einer Mischung aus 850 ml Eisessig und 8,5 ml Schwefelsäure suspendiert. Bei 10 bis 20°C wurde die Suspension über eine Glasfritte mit einem Ozon-haltigen Gasstrom (Strömungsgeschwindigkeit 180-200 l/h) mit einer Konzentration von 50 bis 100 Gramm Ozon pro Kubikmeter Gas begast. Nach 80 Minuten wurde die Reaktion nach Aufnahme von 48 g Ozon abgebrochen, weil sich zu diesem Zeitpunkt ein deutlicher Abfall der Reaktionsgeschwindigkeit abzeichnete. Anschließend wurde das Polymerpulver abfiltriert, mehrmals mit kleinen Mengen Wasser gewaschen und dann bei 30 mbar und 50 - 100°C getrocknet. Im IR-Spektrum sind nur Sulfoxid-Gruppen zu erkennen.
Das Schwefel/Sauerstoff-Verhältnis bei dem erhaltenen Polymer betrug 1:0,51.

## Patentansprüche

1. Verfahren zur Oxidation eines thioethergruppenhaltigen Polymeren, dadurch gekennzeichnet, daß das Polymer in fester Form in einem Suspensionsmedium bei Reaktionstemperaturen von -10 bis +80°C mit Ozon oxidiert wird.

2. Verfahren nach Anspruch 1, dadurch gekennzeichnet, daß als Suspensionsmedium Mineralsäure, ein aliphatischer Alkohol, eine aliphatische Carbonsäure mit jeweils 1-6 C-Atomen im Alkylrest, ein Carbonsäureester aus diesen Verbindungen, halogenierte oder nicht halogenierte Kohlenwasserstoffe mit 1-12 C-Atomen oder eine Mischung aus den genannten Verbindungen eingesetzt wird.

3. Verfahren nach Anspruch 1 oder 2, dadurch gekennzeichnet, daß die Reaktionszeiten bis zu 2 Stunden betragen.

4. Verfahren nach einem oder mehreren der Ansprüche 1 bis 3, dadurch gekennzeichnet, daß Polyarylenthioether mit wiederkehrenden Einheiten der Formeln: 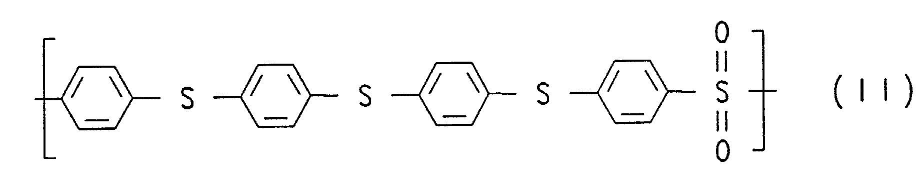 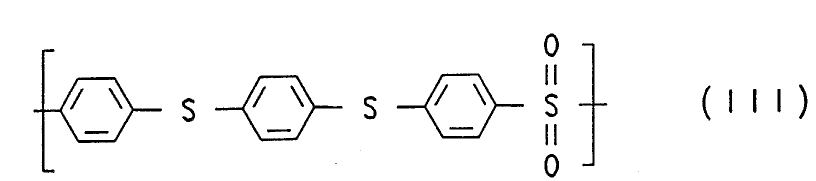 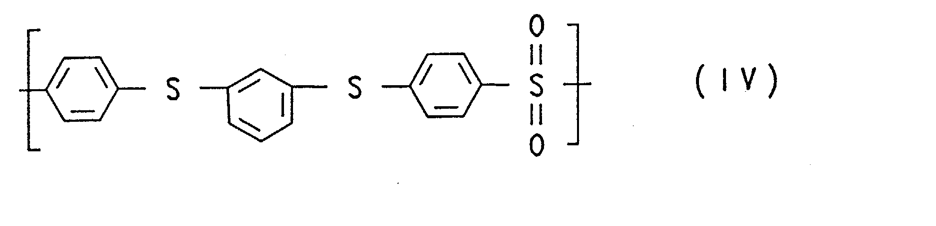 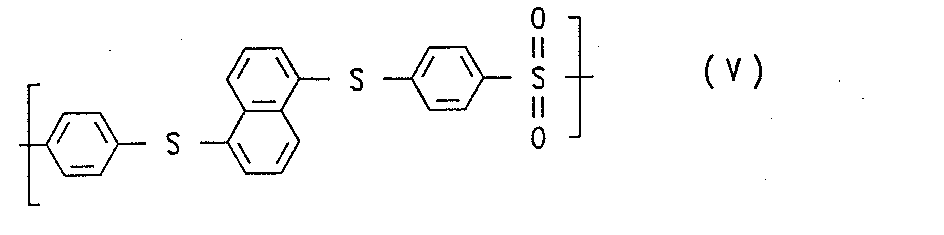 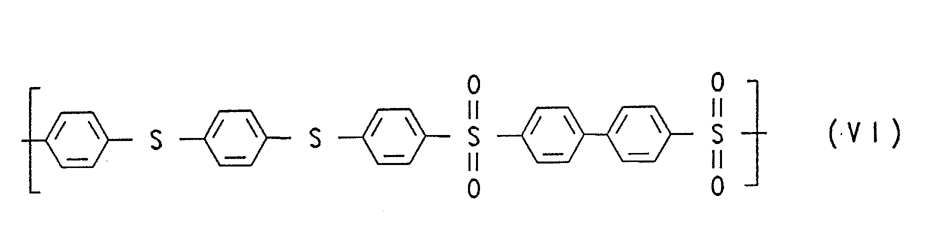 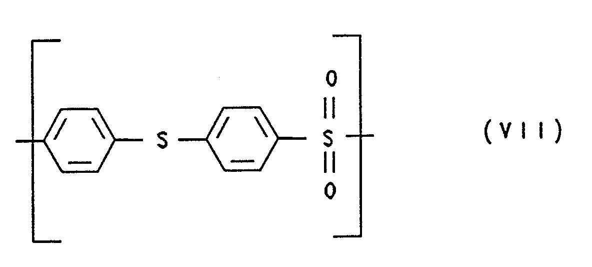 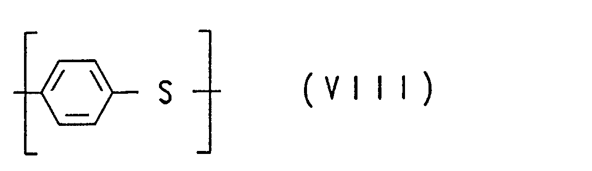 eingesetzt werden.

5. Verfahren nach einem oder mehreren der Ansprüche 1 bis 4, dadurch gekennzeichnet, daß ein Polyphenylenthioether mit einem mittleren Molekulargewicht von 4 000 bis 200 000 und einer mittleren Teilchengröße von 5x10⁻⁶ bis 500x10⁻⁶ m eingesetzt wird.

6. Verfahren zur Herstellung von Form- und Funktionsteilen gemäß den Ansprüchen 1-5 dadurch gekennzeichnet, daß in einem weiteren Verfahrensschritt eine thermoplastische Verarbeitung oder Sinterung erfolgt.

## Claims

1. A process for oxidizing a polymer containing thioether groups, which comprises oxidizing the polymer in solid form in a suspension medium at reaction temperatures of from -10 to +80°C with ozone.

2. The process as claimed in claim 1, wherein the suspension medium used is a mineral acid, an aliphatic alcohol or an aliphatic carboxylic acid each having 1-6 carbon atoms in the alkyl radical, a carboxylic ester of these compounds, halogenated or non-halogenated hydrocarbons having 1-12 carbon atoms, or a mixture of the specified compounds.

3. The process as claimed in claim 1 or 2, wherein the reaction times are up to 2 hours.

4. The process as claimed in one or more of claims 1 to 3, wherein the polyarylene thioethers used have recurring units of the formulae:

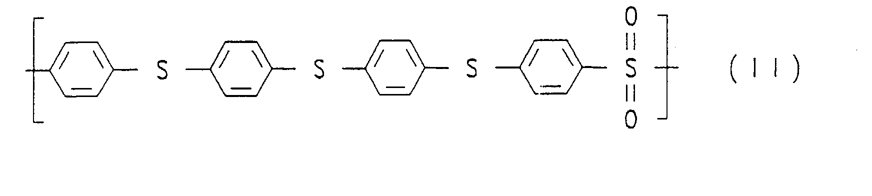

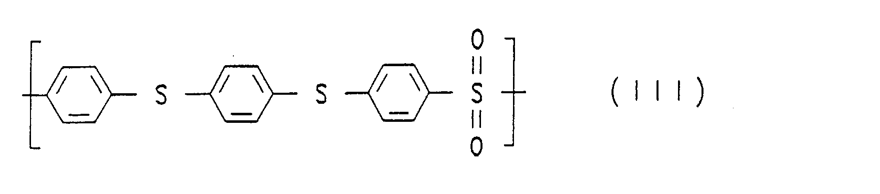

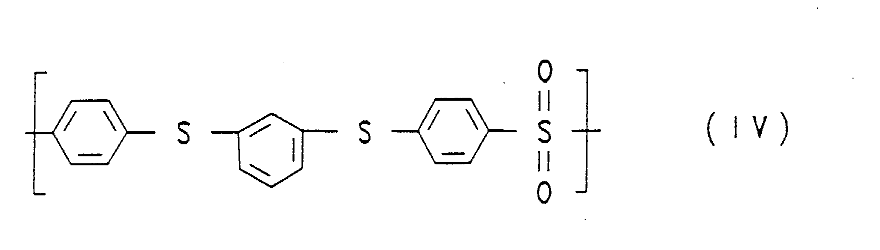

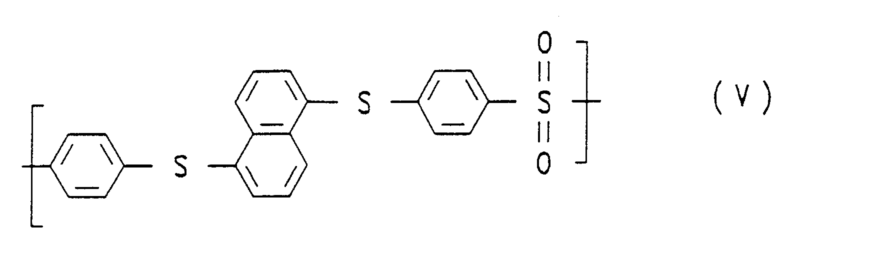

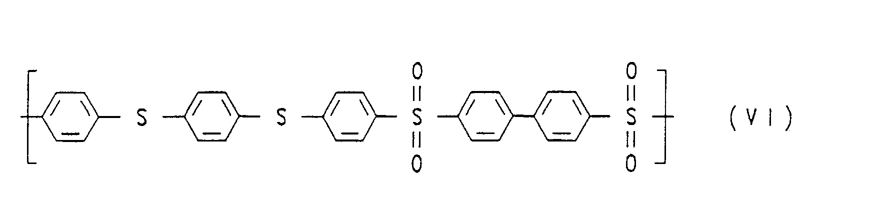

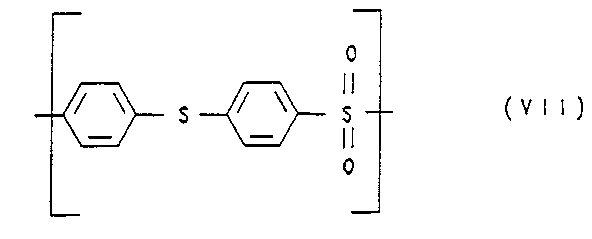

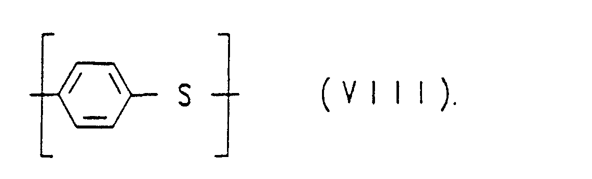

5. The process as claimed in one or more of claims 1 to 4, wherein the polyphenylene thioether used has an average molecular weight of from 4000 to 200,000 and an average particle size of from 5 x 10⁻⁶ to 500 x 10⁻⁶ m.

6. A process for producing molded and functional parts as claimed in any of claimns 1-5, which comprises carrying out thermoplastic processing or sintering in a further process step.

## Revendications

1. Procédé pour l'oxydation d'un polymère contenant des groupes thioéthers, caractérisé en ce que l'on oxyde par l'ozone le polymère sous forme solide dans un milieu de suspension à des températures de réaction de -10 à +80 °C.

2. Procédé selon la revendication 1, caractérisé en ce que le milieu de suspension est un acide minéral, un alcool aliphatique, un acide carboxylique aliphatique, chacun avec 1 à 6 atomes de carbone dans le reste alkyle, un ester d'acide carboxylique de ces composés, des hydrocarbures halogénés et non halogénés avec 1 à 12 atomes de carbone ou un mélange des composés précités.

3. Procédé selon la revendication 1 ou 2, caractérisé en ce que les durées de réaction vont jusqu'à 2 heures.

4. Procédé selon une ou plusieurs des revendications 1 à 3, caractérisé en ce que l'on utilise des poly(arylène thioéthers) avec des motifs répétitifs de formules :

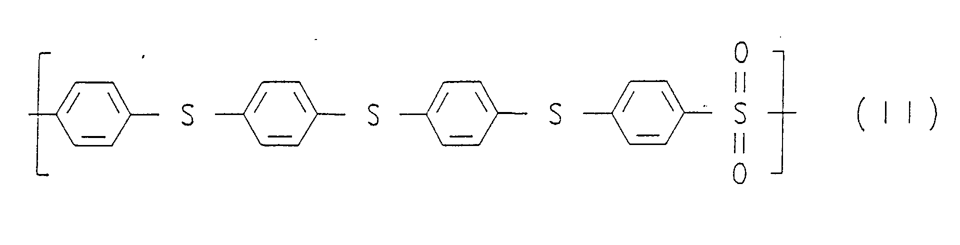

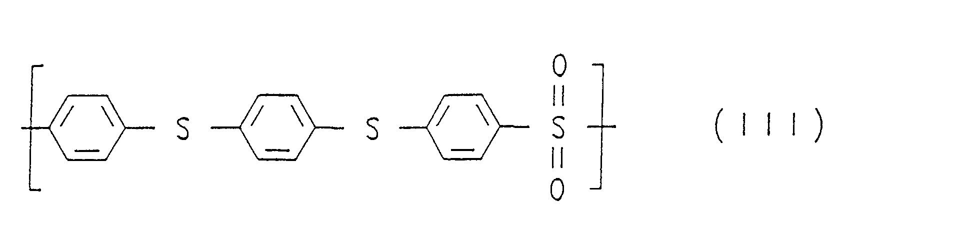

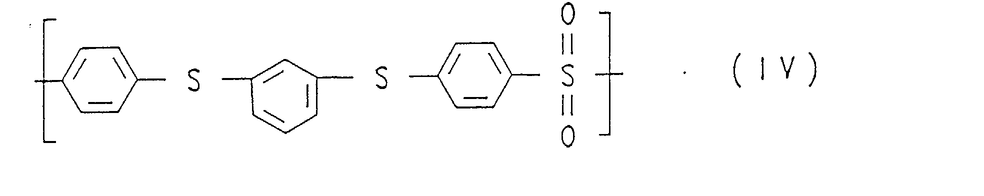

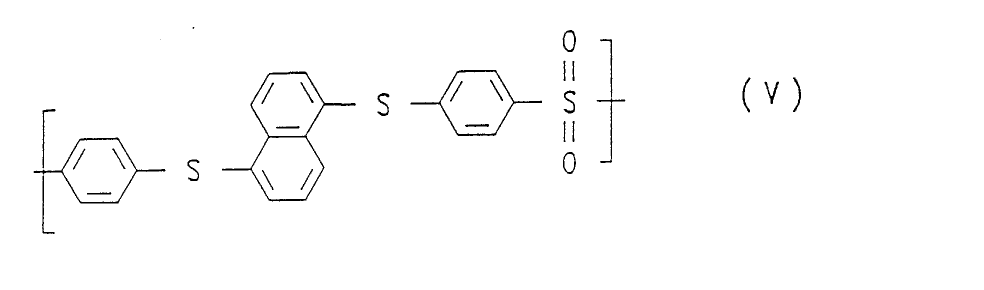

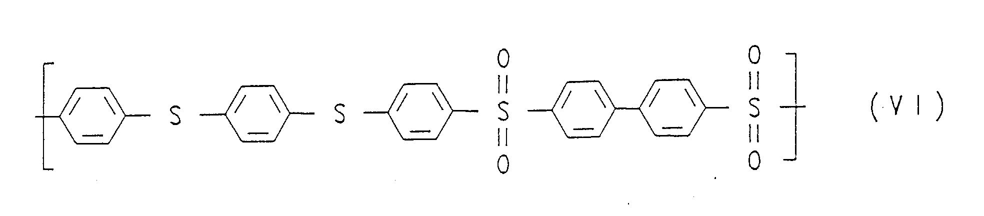

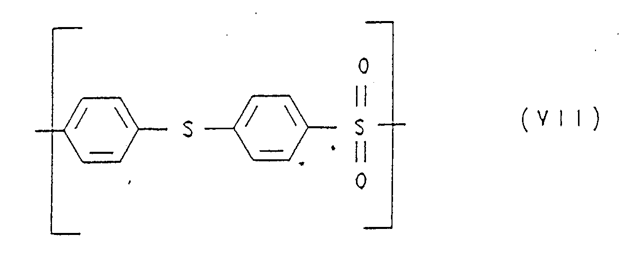

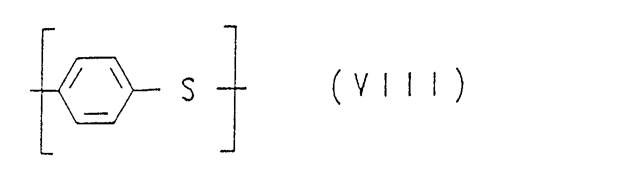

5. Procédé selon une ou plusieurs des revendications 1 à 4, caractérisé en ce que l'on utilise un poly(phénylène thioéther) ayant un poids moléculaire moyen de 4000 à 200 000 et une granulométrie moyenne de 5 x 10⁻⁶ à 500 x 10⁻⁶ m.

6. Procédé pour la préparation de pièces moulées et de pièces fonctionnelles selon les revendications 1 à 5, caractérisé en ce que l'on effectue, dans une étape de procédé ultérieure, une transformation thermoplastique ou un frittage.
